# EUROPEAN PATENT SPECIFICATION

(11) **EP 2 384 933 B1**
(45) Date of publication and mention of the grant of the patent: **16.11.2016**
(21) Application number: 11164865.5
(22) Date of filing: 05.05.2011
(51) Int. Cl.: B60Q 1/14

(54) **Vehicle headlamp system, control device and vehicle headlamp**
Fahrzeugscheinwerfersystem, Steuerungsvorrichtung und Fahrzeugscheinwerfer
Phare de véhicule, dispositif de contrôle et système de phare

(30) Priority: 06.05.2010 JP 2010106614
(43) Date of publication of application: 09.11.2011
(73) Proprietor: Koito Manufacturing Co., Ltd., Tokyo 108-8711 (JP)
(72) Inventor: Nakanishi, Yutaka, Shizuoka-shi Shizuoka (JP); Yamazaki, Atsushi, Shizuoka-shi Shizuoka (JP)
(74) Representative: Grünecker Patent- und Rechtsanwälte PartG mbB

(56) References cited:
- EP-A1- 0 690 261
- EP-A2- 1 136 750
- EP-A2- 1 605 202
- EP-A2- 2 154 426
- FR-A1- 2 930 318
- JP-A- 2010 086 863

## Description

### FIELD

One aspect of the present invention relates to a vehicle lamp system, a control device, and a vehicle lamp, and particularly, to a vehicle lamp system, a control device, and a vehicle lamp which are used for automobiles or the like.

### BACKGROUND

Generally, a vehicle lamp system used for a vehicle headlight is able to switch between a low beam and a high beam. The low beam illuminates an area near the vehicle with certain luminance so that glare is not imparted on a preceding vehicle (vehicle in front) including an oncoming vehicle and a leading vehicle, and is used when the vehicle travels mainly in an urban area. On the other hand, the high beam illuminates a wide front range or a distant place with relatively high luminance, and is used when a vehicle travels at high speed on a road where few preceding vehicles are present.

Although the high beam provides the driver with visibility superior to that provided by the low beam, glare may be imparted to drivers of other vehicles. Accordingly, the low beam is often used particularly during night traveling in an urban area, and a high-beam light source is not used when the low beam is used. Nevertheless, a demand for improving the visibility for the road for the driver when the low beam is used persists.

On the other hand, JP-A-2010-000957 discloses a vehicle headlight device including a lamp capable of irradiating a left-added light distribution pattern including an area on the left of a vertical line above a cut-off line of a low-beam light distribution pattern, and a right-added light distribution pattern including an area on the right of the vertical line, and controlling so as to irradiate the left-added light distribution pattern or the right-added light distribution pattern according to the position of a vehicle.

JP 2010 086863 A describes a vehicular headlight device, especially the headlight device for vehicles which switches to low and to high beam using a shade. The shade is provided as a rotation shade, which carries out selection formation of anyone of two or more light distribution patterns by rotating. The rotary shade engages with the shape driving actuator to rotationally drive the rotary shade, so that they are brought in contact with or are separated from each other. A radiation control part is provided to activate or control the shade.

The inventors have come to recognize the following in the above-described situation. That is, for example, when switching is performed between two light distribution patterns in which at least portions of irradiation areas are shifted from each other as in a case where switching is performed between the left-added light distribution pattern and the right-added light distribution pattern, a portion which becomes bright by the switching and a portion which becomes dark by the switching exist simultaneously. In such a case, there may be a concern in that a driver experiences a visual disturbance.

### SUMMARY

Embodiments of the present invention has been made based on this recognition by the inventors, and an object of some embodiments is to alleviate the visual disturbance that a driver may receive when switching is performed between two light distribution patterns in which at least portions of irradiation areas have shifted from each other.

In order to solve the above problems, there is provided a vehicle lamp system comprising: a vehicle lamp that forms a first light distribution pattern and a second light distribution pattern, wherein the second light distribution pattern forms an irradiation area where at least a portion thereof is shifted from an irradiation area formed by the first light distribution pattern; characterized in that a controller that controls the vehicle lamp to switch between a first state and a second state via an intermediate state, wherein the intermediate state is maintained for a certain time, wherein in the first state the first light distribution pattern is formed, wherein in the second state the second light distribution pattern is formed, wherein in the intermediate state a first irradiation area and a second irradiation area are matched in brightness, the first irradiation area is changed from an illuminated state to a non-illuminated state due to the switching, and the second irradiation area is changed from a non-illuminated state to the illuminated state due to the switching, and wherein the first light distribution pattern forms an irradiation area, which is on a opposite lane side, which is opposite an own lane of the vehicle, and the irradiation area is above a cut-off line of a low-beam light distribution pattern and the first light distribution pattern also forms a non-irradiation area on the own lane side of the vehicle, respectively, wherein the second light distribution pattern forms an irradiation area, which is on the own lane side of the vehicle and the irradiation area is above the cut-off line of the low-beam light distribution pattern and the second light distribution pattern forms a non-irradiation area on the opposite lane side, respectively.

According to this aspect, it is possible to alleviate the visual disturbance that a driver may receive when switching is performed between two light distribution patterns in which at least portions of irradiation areas are shifted from each other.

In the above aspect, both the first light distribution pattern and the second light distribution pattern are not formed simultaneously in the intermediate state. Alternatively, in the above aspect, both the first light distribution pattern and the second light distribution pattern are formed in the intermediate state. Moreover, in the above aspect, the vehicle lamp may be configured to form a high-beam light distribution pattern, and the high-beam light distribution pattern may be formed in the intermediate state.

According to embodiments of the invention, it may be possible to alleviate the visual disturbance that a driver may receive when switching is performed between two light distribution patterns in which at least portions of irradiation areas are shifted from each other.

### BRIEF DESCRIPTION OF THE DRAWINGS

A general configuration that implements the various features of embodiments of the present invention will be described with reference to the drawings. The drawings and the associated descriptions are provided to illustrate embodiments of the invention and should not limit the scope of the invention.
Fig. 1 is a schematic vertical sectional view illustrating the internal structure of a vehicle lamp system related to a first embodiment.
Fig. 2 is a schematic perspective view of a rotary shade.
Fig. 3 is a functional block diagram illustrating the coordination of an operation between an irradiation controller of a headlamp unit and a vehicle controller on the side of the vehicle.
Figs. 4A through 4F are explanatory views showing shapes of light distribution patterns.
Fig. 5 is an explanatory view showing the relationship between a light distribution pattern, inter-vehicle distance, and the vehicle speed of an automobile.
Fig. 6 is a control flow chart of the formation of a light distribution pattern in the vehicle lamp system related to the first embodiment.
Fig. 7 is a control flow chart of the formation of a light distribution pattern in the vehicle lamp system related to a second embodiment.
Fig. 8 is a control flow chart of the formation of a light distribution pattern in the vehicle lamp system related to the third embodiment.
Fig. 9 is a control flow chart of the formation of a light distribution pattern in the vehicle lamp system related to a fourth non-inventive embodiment.
Fig. 10 is a control flow chart of the formation of a light distribution pattern in the vehicle lamp system related to a fifth non-inventive embodiment.

### DETAILED DESCRIPTION OF THE EMBODIMENTS

Aspects of the present invention will now be described below, referring to the drawings based on exemplary embodiments. The same or equivalent constituent elements, members, and processes in respective drawings will be designated by the same reference numerals, and duplicate description will be appropriately omitted. Additionally, the embodiments do not limit the invention but are merely illustrative, and all features or combinations described in the embodiments are not necessarily limited as being essential to the invention.

### (First embodiment)

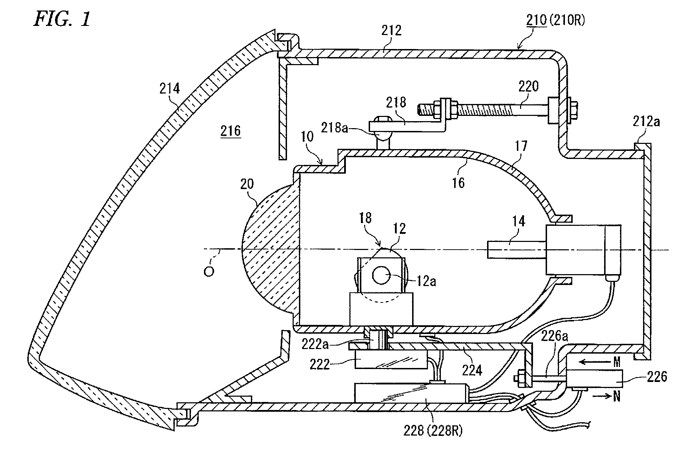

Fig. 1 is a schematic vertical sectional view illustrating the internal structure of a vehicle lamp system related to a first embodiment. A vehicle lamp system 200 of the present embodiment is a light distribution variable system in which a pair of headlamp units which are symmetrically formed on the right and left are respectively arranged on the right and left of a vehicle in a vehicle width direction. Since the headlamp units arranged on the right and left have substantially the same configuration except that the headlamp units have a bilaterally symmetrical structure, the structure of the right headlamp unit 210R will be described, and description of the left headlamp unit will be appropriately omitted. In addition, when respective members of the left headlamp unit are described, the respective members will be designated by the same reference numerals as those of corresponding members of the headlamp unit 210R for convenience of description.

The headlamp unit 210R has a lamp body 212 having an opening on the front side of the vehicle, and a translucent cover 214 which covers the opening. The lamp body 212 has a detachable cover 212a which can be removed, for example, when replacing a bulb 14 on the rear side of the vehicle. A lamp chamber 216 is formed by the lamp body 212 and the translucent cover 214. A lamp unit 10 (vehicle lamp) which irradiates light toward the front of the vehicle is housed in the lamp chamber 216.

A portion of the lamp unit 10 is formed with a lamp bracket 218 which has a pivot mechanism 218a which becomes the center of oscillation in up, down, right, and left directions of the lamp unit 10. The lamp bracket 218 is screwed to an aiming adjusting screw 220 rotatably supported by the wall surface of the lamp body 212. Accordingly, the lamp unit 10 is fixed to a certain position within the lamp chamber 216 determined in the adjusted state of the aiming adjusting screw 220, and its posture can be changed to a forward tilted posture, a rearward tilted posture, or the like about the pivot mechanism 218a based on the position.

A rotary shaft 222a of a swivel actuator 222 for constituting a light distribution variable headlamp for a curved road (Adaptive Front-lighting System: AFS) which illuminates a traveling direction, such as while traveling along the curved road, is fixed to a lower surface of the lamp unit 10. The swivel actuator 222 swivels the lamp unit 10 about the pivot mechanism 218a in the traveling direction, based on data of a steering amount provided from the vehicle side, the shape data of a road being traveled along provided from a navigation system, and the relationship in relative position between a preceding vehicle, which might include an oncoming vehicle and a leading vehicle, and a subject vehicle. As a result, the irradiation area of the lamp unit 10 is directed not to the front of the vehicle but to the edge of a curve of a curved road, thereby improving front visibility for the driver. The swivel actuator 222 can be constituted by, for example, a stepping motor. In addition, when the swivel angle has a fixed value, a solenoid or the like can also be used.

The swivel actuator 222 is fixed to a unit bracket 224. A leveling actuator 226 arranged outside the lamp body 212 is connected to a unit bracket 224. The leveling actuator 226 is constituted by, for example, a motor or the like which extends or retracts a rod 226a in the direction of an arrow M or N. When the rod 226a is extended in the direction of the arrow M, the lamp unit 10 oscillates so as to take a rearward tilted posture about the pivot mechanism 218a. Conversely, when the rod 226a is retracted in the direction of the arrow N, the lamp unit 10 oscillates so as to take a forward tilted posture about the pivot mechanism 218a. When the lamp unit 10 takes a rearward tilted posture, leveling adjustment of directing the optical axis O upward can be performed. Additionally, when the lamp unit 10 takes a forward tilted posture, leveling adjustment of directing the optical axis O downward can be performed. By implementing such leveling adjustment, optical-axis adjustment according to the posture of the vehicle can be performed. As a result, the reaching distance of front irradiation light by the vehicle lamp system 200 can be adjusted to an optimal distance.

In addition, this leveling adjustment can be performed according to a vehicle posture during traveling of the vehicle. For example, when the vehicle is accelerated during traveling, the vehicle posture becomes the rearward tilted posture. On the contrary, when the vehicle is decelerated, the vehicle posture becomes the forward tilted posture. Accordingly, the irradiation direction of the vehicle lamp system 200 also fluctuates up and down in response to the posture state of the vehicle, and the front irradiation distance becomes longer or shorter. Thus, the reaching distance of the front irradiation can be optimally adjusted even during traveling by performing the leveling adjustment of the lamp unit 10 in real time based on a vehicle posture. This may be referred to as "auto-leveling".

An irradiation controller 228 (controller or control device) which performs control of turning-on/off of the lamp unit 10 or control of formation of a light distribution pattern is arranged on the inner wall surface of the lamp chamber 216 below of the lamp unit 10. In the case of Fig. 1, an irradiation controller 228R for controlling the headlamp unit 210R is arranged. The irradiation controller 228R also performs control of the swivel actuator 222, the leveling actuator 226, or the like. The lamp unit 10 can include an aiming adjusting mechanism. For example, an aiming pivot mechanism (not shown) which becomes the center of oscillation during aiming adjustment is arranged at a connecting portion between the rod 226a of the leveling actuator 226 and the unit bracket 224. Additionally, the aforementioned aiming adjusting screws 220 are arranged at a distance from each other in the vehicle width direction at the lamp bracket 218. For example, if the two aiming adjusting screws 220 are rotated in the counterclockwise direction, the lamp unit 10 takes a forward tilted posture about the aiming pivot mechanism so that the optical axis is adjusted downward. Similarly, if the two aiming adjusting screws 220 are rotated in the clockwise direction, the lamp unit 10 takes a rearward tilted posture about the aiming pivot mechanism so that the optical axis is adjusted upward. Additionally, if the aiming adjusting screw 220 on the left in the vehicle width direction is rotated in the counterclockwise direction, the lamp unit 10 takes a right-turning posture about the aiming pivot mechanism so that the optical axis is adjusted rightward. Additionally, if the aiming adjusting screw 220 on the right in the vehicle width direction is rotated in the counterclockwise direction, the lamp unit 10 takes a left-turning posture about the aiming pivot mechanism so that the optical axis is adjusted leftward. This aiming adjustment is performed on the shipment of a vehicle or the inspection of a vehicle or when replacing the headlamp unit 210R. Also, the headlamp unit 210R is adjusted to a posture determined in the design, and control of the formation of a light distribution pattern of the present embodiment is performed based on this posture.

The lamp unit 10 includes a shade mechanism 18 including a rotary shade 12, the bulb 14 serving as a light source, a lamp housing 17 which supports a reflector 16 on the inner wall thereof, and a projection lens 20. As the bulb 14, for example, an incandescent lamp, a halogen lamp, a discharge bulb, an LED, or the like can be used. The present embodiment shows an example in which the bulb 14 is constituted by a halogen lamp. The reflector 16 reflects the light emitted from the bulb 14. Also, the light from the bulb 14 and the light reflected by the reflector 16 are partially guided to the projection lens 20 via the rotary shade 12. In addition, illustration of the shade plates 24 which will be described below is omitted in Fig. 1.

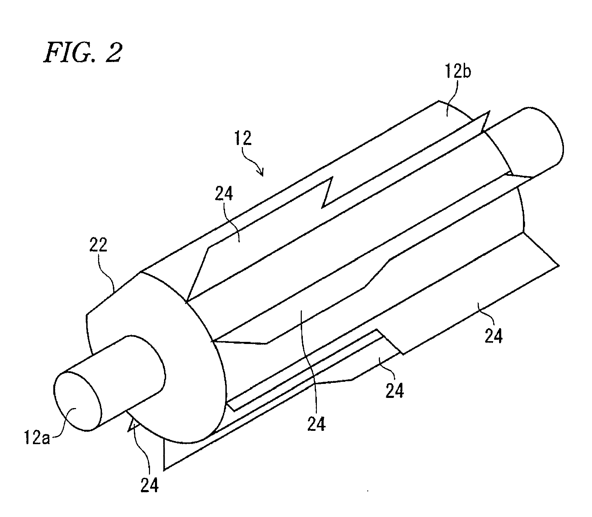

Fig. 2 is a schematic perspective view of the rotary shade. The rotary shade 12 is a cylindrical member which is rotatable about a rotating shaft 12a. Additionally, the rotary shade 12 has a cutout portion 22 which is partially cut out in the axial direction, and holds a plurality of plate-shaped shade plates 24 at an outer peripheral surface 12b excluding the cutout portion 22. The rotary shade 12 can move the cutout portion 22 or any one of the shade plates 24 to a rear focal position of the projection lens 20 on the optical axis O according to the angle of rotation thereof. This forms a light distribution pattern according to the shape of ridgeline portions of the shade plates 24 arranged on the optical axis O. For example, a low-beam light distribution pattern or a light distribution pattern partially including the feature of a high-beam light distribution pattern can be formed by moving any one of the shade plates 24 of the rotary shade 12 on the optical axis O, thereby shading a portion of the light radiated from the bulb 14. Additionally, a high-beam light distribution pattern can be formed by moving the cutout portion 22 on the optical axis O, thereby bringing the light radiated from the bulb 14 into non-shaded light.

The rotary shade 12 is movable by, for example, the running of a motor, and can move the shade plates 24 or the cutout portion 22 for forming a desired light distribution pattern on the optical axis O by controlling the rotational amount of the motor. In addition, only a shading function may be imparted to the rotary shade 12 by omitting the cutout portion 22 of the outer peripheral surface 12b of the rotary shade 12. Also, when a high-beam light distribution pattern is formed, for example, the solenoid or the like is driven so that the rotary shade 12 is retracted from the position of the optical axis O. By adopting such a configuration, for example, even if the motor which rotates the rotary shade 12 has failed, the rotary shade is fixed in a low-beam light distribution pattern or a light distribution pattern similar thereto. That is, it is possible to prevent with certainty the rotary shade 12 from being fixed in a posture for forming a high-beam light distribution pattern, thereby realizing a fail-safe function.

Returning to Fig. 1, at least a portion of the reflector 16 is formed in the shape of an elliptical spherical surface, and this elliptical spherical surface is set so that the cross-sectional shape including the optical axis O of the lamp unit 10 becomes at least a portion of an elliptical shape. The elliptical spherical portion of the reflector 16 has a first focus substantially at the center of the bulb 14, and has a second focus on a rear focal plane of the projection lens 20.

The projection lens 20 is arranged on the optical axis O which extends in the longitudinal direction of the vehicle, and the bulb 14 is arranged behind a rear focal plane which is a focal plane including a rear focus of the projection lens 20. The projection lens 20 includes a planoconvex aspheric lens whose front surface is a convex surface and whose rear surface is a plane surface, and projects a light source image formed on a rear focal plane onto a virtual vertical screen ahead of the vehicle lamp system 200 as an inverted image. In addition, the configuration of the lamp unit 10 is not particularly limited thereto, and may be a reflective lamp unit which does not have the projection lens 20 or the like.

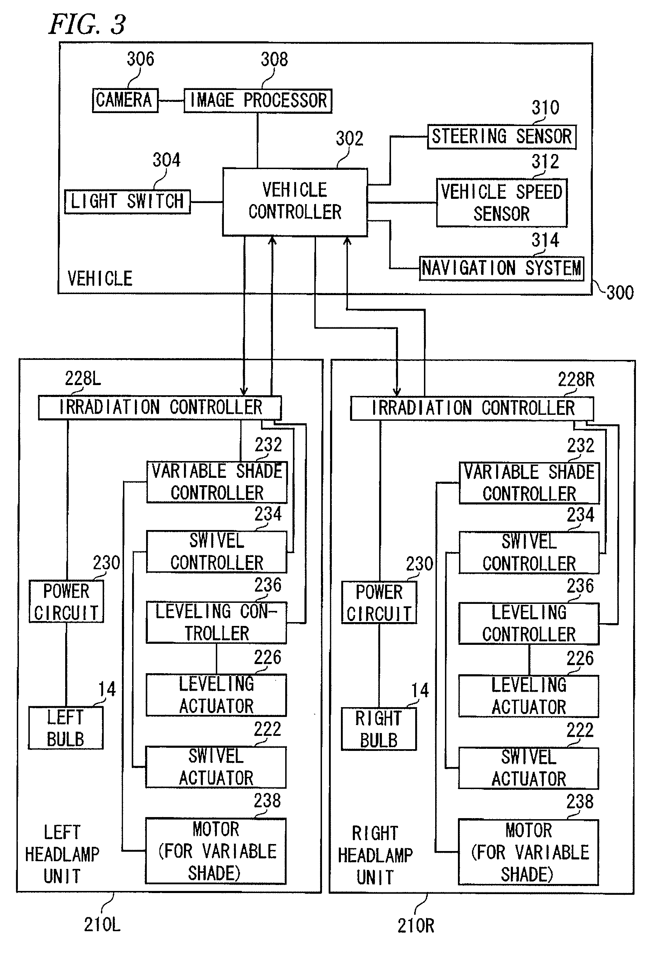

Fig. 3 is a functional block diagram illustrating the coordination of operation between an irradiation controller of a headlamp unit configured as described above, and a vehicle controller on the side of the vehicle. In addition, since the configuration of the right headlamp unit 210R and the left headlamp unit 210L are basically the same as described above, only the headlamp unit 210R side will be described, and description of the headlamp unit 210L side will be omitted.

The irradiation controller 228R of the headlamp unit 210R controls a power circuit 230 based on the information obtained from the vehicle controller 302 mounted on the vehicle 300, and performs turn-on control of the bulb 14. Additionally, the irradiation controller 228R controls a variable shade controller 232, a swivel controller 234, and a leveling controller 236 based on the information obtained from the vehicle controller 302. The variable shade controller 232 controls rotation of the motor 238 connected to the rotating shaft 12a of the rotary shade 12 via a gear mechanism, and moves a desired shade plate 24 or cutout portion 22 on the optical axis O. In addition, rotational information showing the rotational state of the rotary shade 12 is provided to the variable shade controller 232 from a detection sensor, such as an encoder included in the motor 238 or the rotary shade 12. Thereby, an accurate rotation control by feedback control is realized.

The swivel controller 234 controls the swivel actuator 222 to adjust the optical axis O of the lamp unit 10 with respect to the vehicle width direction. For example, the optical axis O of the lamp unit 10 is directed to the advancing direction from the optical axis during turning, such as curved road traveling or right or left turning. Additionally, the leveling controller 236 controls the leveling actuator 226 to adjust the optical axis of the lamp unit 10 with respect to the up-and-down direction of the vehicle. For example, the posture of the lamp unit 10 is adjusted according to the forward tilting, and rearward tilting of the vehicle posture during acceleration and deceleration, thereby adjusting the reaching distance of the front irradiation light to an optimal distance. The vehicle controller 302 provides the same information even on the headlamp unit 210L, and the irradiation controller 228L (controller or control device) provided in the headlamp unit 210L performs the same control as the irradiation controller 228R.

In the present embodiment, a light distribution pattern formed by the headlamp units 210L and 210R can be switched according to the contents of operation of a light switch 304 by a driver. In this case, the irradiation controllers 228L and 228R control the motor 238 via the variable shade controller 232 according to the operation of the light switch 304, thereby determining a light distribution pattern formed by the lamp unit 10.

The headlamp units 210L and 210R of the present embodiment may perform automatic control so as to detect the situation around the vehicle by various sensors irrespective of the operation of the light switch 304, thereby forming a light distribution pattern which is optimal for the state of the vehicle 300 or the situation around the vehicle. For example, when it is not possible to detect that a leading vehicle, an oncoming vehicle, a pedestrian, or the like exists ahead of a subject vehicle, the irradiation controllers 228L and 228R determines that glare should be prevented based on the information obtained from the vehicle controller 302, and a low-beam light distribution pattern is formed by the lamp unit 10. For example, when it is possible to detect that a leading vehicle, an oncoming vehicle, a pedestrian, or the like does not exist ahead of a subject vehicle, the irradiation controllers 228L and 228R determines that visibility for the driver should be improved, and a high-beam light distribution pattern without shading by the rotary shade 12 is formed. Additionally, when it is possible to form a special high-beam light distribution pattern or a special low-beam light distribution pattern which will be described below in addition to a low-beam light distribution pattern and a high-beam light distribution pattern, an optimal light distribution pattern in consideration of a preceding vehicle may be formed according to the presence of the preceding vehicle. Such control mode may be referred to as an Adaptive Driving Beam (ADB) mode.

In order to detect an object, such as a leading vehicle, an oncoming vehicle, or the like, in this way, a camera 306, such as a stereoscopic camera, is connected to the vehicle controller 302 as the recognition means of an object. The image frame data taken by the camera 306 is subjected to certain image processing, such as object recognition processing, in an image processor 308, and the recognition result is provided to the vehicle controller 302. For example, when the data including feature points showing a vehicle held in advance by the vehicle controller 302 is present in the recognition result data provided from the image processor 308, the vehicle controller 302 recognizes the presence of the vehicle, thereby providing the information to the irradiation controllers 228L and 228R. The irradiation controllers 228L and 228R receive the information on the vehicle from the vehicle controller 302, thereby forming an optimal light distribution pattern in consideration of the vehicle. Here, the above "feature points showing a vehicle" are, for example, a light spot with a certain luminous intensity which appears in an estimated presence area of the headlamp of a preceding vehicle or a beacon light, such as a taillight. Additionally, for example, when the data including feature points showing a pedestrian which is held in advance is present in the recognition result data provided from the image processor 308, the vehicle controller 302 provides the information to the irradiation controllers 228L and 228R, and the irradiation controllers 228L and 228R forms an optimal light distribution pattern in consideration of the pedestrian.

Additionally, the vehicle controller 302 can also acquire the information from a steering sensor 310, a vehicle speed sensor 312, and the like which are typically mounted on the vehicle 300. Thereby, the irradiation controllers 228L and 228R can select a light distribution pattern to be formed according to the traveling state or traveling posture of the vehicle 300, or can change the direction of the optical axis O to change a light distribution pattern simply and easily. For example, when the vehicle controller 302 has determined that the vehicle is turning based on the information from the steering sensor 310, the irradiation controllers 228L and 228R which have received the information from the vehicle controller 302 can select a shade plate 24 for forming a light distribution pattern which improves the field of view in a turning direction. Additionally, the field of view may be improved by controlling the swivel actuator 222 by the swivel controller 234 to direct the optical axis O of the lamp unit 10 to a turning direction, without changing the rotational state of the rotary shade 12. Such a control mode may be referred to as a turning sensitive mode.

Additionally, when the vehicle travels at high speed in the night, it is preferable that the front of the subject vehicle may be illuminated so that an oncoming vehicle or a leading vehicle which is approaching from a distant place, or a road sign, a message board, or the like can be recognized as soon as possible. Thus, when the vehicle controller 302 has determined that the vehicle travels at high speed based on the information from the vehicle sensor 312, the irradiation controllers 228L and 228R may select a shade plate 24 for forming a low-beam light distribution pattern in an expressway mode in which a portion of the shape of the low-beam light distribution pattern is changed. The same control can also be realized by controlling the leveling actuator 226 by the leveling controller 236 to change the lamp unit 10 to a forward tilting posture. The auto-leveling control during acceleration or deceleration by the above-described leveling actuator 226 is the control of keeping the irradiation distance constant. If the height of a cut-off line is positively controlled using this control, the control equivalent to the control of rotating the rotary shade 12 to select a different cut-off line can be performed. Such a control mode may be referred to as a speed sensitive mode.

Additionally, the vehicle controller 302 is also able to acquire the information from an inter-vehicle distance sensor (not shown) which is mounted on the vehicle 300 acquired, and the irradiation controllers 228L and 228R can adjust the height of a cut-off line of a light distribution pattern according to the distance (inter-vehicle distance) of a preceding vehicle and a subject vehicle. For example, when the vehicle controller 302 has determined that the preceding vehicle is relatively far away based on the information from the inter-vehicle sensor, the irradiation controllers 228L and 228R control the leveling actuator 226 by the leveling controller 236, thereby changing the lamp unit 10 to a rearward tilted posture. By slightly raising the cut-off line of the low-beam light distribution pattern thereby, driver's visibility can be improved while preventing glare to the preceding vehicle. A light distribution pattern formed by such control may be referred to as a dynamic cut-off line light distribution pattern.

In addition, the adjustment of the optical axis of the lamp unit 10 can also be performed without using the swivel actuator 222 and the leveling actuator 226. For example, the visibility in a desired direction may be improved by turning the lamp unit 10 or bringing the lamp unit into a forward tilted posture or rearward tilting posture so as to perform aiming control in real time.

In addition, the vehicle controller 302 can also acquire shape information or form information on a road, installation information on a road sign, or the like from a navigation system 314. By acquiring these kinds of information in advance, the irradiation controllers 228L and 228R can control the leveling actuator 226, the swivel actuator 222, the motor 238, and the like, thereby smoothly forming the light distribution pattern suitable for a road being traveled along. Such a control mode may be referred to as a navigation sensitive mode. The automatic formation control of a light distribution pattern including the various control modes described above is performed, for example, when automatic formation control of a light distribution pattern is instructed by the light switch 304.

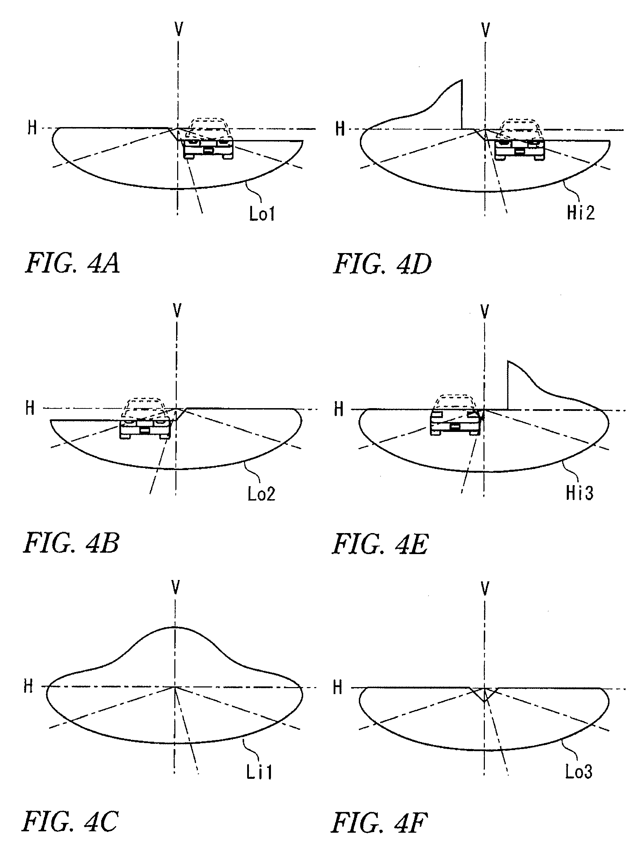

Next, a light distribution pattern which can be formed by the lamp unit 10 of each of the headlamp units 210L and 210R will be described. Figs. 4A to 4F are explanatory views showing the shapes of light distribution patterns. In addition, Figs. 4A to 4F show a light distribution pattern formed on a virtual vertical screen which is arranged at a certain position ahead of a lamp, for example, at a position 25 m ahead of the lamp.

As described above, the headlamp unit 210L and the headlamp unit 210R have substantially the same configuration and it is accordingly possible to form the same light distribution pattern. Additionally, as shown in Fig. 1, since the projection lens 20 includes a planoconvex aspheric lens whose front surface is a convex surface and whose rear surface is a plane surface, respective light distribution patterns excluding the high-beam light distribution pattern have images in which light source images including the portions shaded by the shade plates 24 corresponding to these patterns are inverted vertically and horizontally. Accordingly, the cut-off line shapes of the respective light distribution patterns and the ridgeline shapes of the respective shade plates 24 correspond to each other.

The light distribution pattern shown in Fig. 4A is a basic low-beam light distribution pattern Lo1. The basic low-beam light distribution pattern Lo1 is a light distribution pattern which has been considered so that glare is not imparted to a preceding vehicle or a pedestrian during left-hand traffic. The basic low-beam light distribution pattern Lo1 has an opposite-lane-side cut-off line which extends parallel to an H-H line which is a horizontal line, on the right of a V-V line which is a vertical line, an own-lane-side cut-off line which extends parallel to the H-H line at a position higher than the opposite-lane-side cut-off line, on the left of the V-V line, and an oblique cut-off line which connects both the cutoff lines between the opposite-lane-side cut-off line and the own-lane-side cut-off line. The oblique cut-off line extends at an inclination angle of 45 degree obliquely in the upper left direction from the point of intersection between the opposite-lane-side cut-off line and the V-V line.

The light distribution pattern shown in Fig. 4B is a Dover-low-beam light distribution pattern Lo2 which forms a so-called "Dover low beam". The Dover-low-beam light distribution pattern Lo2 is a light distribution pattern which has been considered so that glare is not imparted to a preceding vehicle or a pedestrian during right-hand traffic. The Dover-low-beam light distribution patterns Lo2 is line-symmetrical to the basic low-beam light distribution pattern Lo1 with the V-V line as a symmetrical axis.

The light distribution pattern shown in Fig. 4C is a high-beam light distribution pattern Hi1. The high-beam light distribution pattern Hi1 is a light distribution pattern which illuminates a front wide range and a distant place, and is formed, for example, when it is not necessary to consider glare to a preceding vehicle or a pedestrian. Specifically, the high-beam light distribution pattern Hi1 is formed when neither a preceding vehicle nor a pedestrian is not present or when the preceding vehicle is present at a distance place to such a degree that glare is not received even if the preceding vehicle or the like forms the high-beam light distribution pattern Hi1.

The light distribution pattern shown in Fig. 4D is a left high-beam light distribution pattern Hi2 (second light distribution pattern) which forms a so-called "left high beam". The left high-beam light distribution pattern Hi2 is a special high-beam light distribution pattern which shades the opposite lane side of the high-beam light distribution pattern Hi1 during left traffic and is radiated in a high-beam area only on the own lane side. That is, the left high-beam light distribution pattern Hi2 is a light distribution pattern which has an irradiation area on the own lane side and a non-irradiation area on the opposite lane side, respectively, above the cut-off lines of the basic low-beam light distribution pattern Lo1. The left high-beam light distribution pattern Hi2 is preferably used when neither a preceding vehicle nor a pedestrian is present on the own lane, and an oncoming vehicle or a pedestrian is present on the opposite lane, and can increase visibility for a driver by irradiation of a high beam only on the own lane side without imparting glare to an oncoming vehicle or a pedestrian.

The light distribution pattern shown in Fig. 4E is a right high-beam light distribution pattern Hi3 (first light distribution pattern) which forms a so-called "right high beam". The right high-beam light distribution pattern Hi3 is a special high-beam light distribution pattern which shades the own lane side of the high-beam light distribution pattern Hi1 during left traffic and is radiated in a high-beam area only on the opposite lane side. That is, the right high-beam light distribution pattern Hi3 is a light distribution pattern which has an irradiation area on the opposite lane side and a non-irradiation area on the own lane side, respectively, above the cut-off lines of the basic low-beam light distribution pattern Lo1. The right high-beam light distribution pattern Hi3 is preferably used when neither a preceding vehicle nor a pedestrian is present on the opposite lane, and an oncoming vehicle or a pedestrian is present on the own lane, and can increase driver's visibility by irradiation of a high beam only on the opposite lane side without imparting glare to an oncoming vehicle or a pedestrian.

The light distribution pattern shown in Fig. 4F is a V-beam light distribution pattern Lo3 which forms a so-called "V-beam". The V-beam light distribution pattern Lo3 is a special low-beam light distribution pattern in which both the own lane side cut-off line and the opposite-lane-side cut-off line is comparable in height to the horizontal line and which has intermediate features between a low beam and a high beam. The V-beam light distribution pattern Lo3 can be formed, for example, by superimposing together a basic low-beam light distribution pattern LolL (for convenience of description, symbol "L" is given after a symbol for each light distribution pattern in light distribution patterns formed by the headlamp unit 210L and symbol "R" is given after a symbol for each light distribution pattern in light distribution patterns formed by the headlamp unit 210R; the same is true in the following) formed by the headlamp unit 210L, and a Dover low-beam light distribution pattern Lo2R formed by the headlamp unit 210R.

As described above, the basic low-beam light distribution pattern LolL has an oblique cut-off line, and the Dover low-beam light distribution pattern Lo2R is line-symmetrical to the basic low-beam light distribution pattern Lo1L. Therefore, the V-beam light distribution pattern Lo3 has a substantially V-shaped shading area formed by two oblique cut-off lines below the horizontal line of a central portion. Additionally, since the basic low-beam light distribution pattern LolL and the Dover low-beam light distribution pattern Lo2R are superimposed on each other, the optical irradiation area of the V-beam light distribution pattern Lo3 on the opposite lane side is moved upward higher than the optical irradiation area of the basic low-beam light distribution pattern Lo1 on the opposite lane side. On the other hand, as for the Dover low-beam light distribution pattern Lo2, the optical irradiation area on the own lane side moves upward. Accordingly, the V-beam light distribution pattern Lo3 becomes a light distribution pattern which can improve driver's visibility more than the basic low-beam light distribution pattern Lo1 and the Dover low-beam light distribution pattern Lo2. The V-beam light distribution pattern Lo3 can increase driver's visibility by the light irradiation to a height comparable to the horizontal line without imparting glare to a preceding vehicle or a pedestrian which is relatively far away.

The vehicle lamp system 200 related to the present embodiment can form a so-called split light distribution pattern, in addition to the above-described various light distribution patterns. This split light distribution pattern is a special high-beam light distribution pattern which has a shading area (non-irradiation area) in a central portion above the horizontal line and has high-beam areas on both sides of the shading area in the horizontal direction. The split light distribution pattern can be formed, for example, by superimposing together a left high-beam light distribution pattern Hi2L formed by the headlamp unit 210L and a right high-beam light distribution pattern Hi3R formed by the headlamp unit 210R. The range of the shading area can be horizontally changed by making the lamp units 10 of the headlamp units 210L and 210R slide to horizontally move at least one of the left high-beam light distribution pattern Hi2L and the right high-beam light distribution pattern Hi3R.

When the vehicle controller 302 detects the presence of a preceding vehicle using the information obtained from the camera 306 in a state where the automatic formation control of a light distribution pattern is instructed by the light switch 304, the irradiation controllers 228L and 228R which have received the information from the vehicle controller 302 determine whether or not the preceding vehicle is within a range where the shading area can be formed. When the preceding vehicle is within a range where the shading area can be formed, the irradiation controllers 228L and 228R form a split light distribution pattern such that the preceding vehicle includes the shading area. Additionally, the irradiation controllers 228L and 228R make the shading area deform in conformity with the position of the preceding vehicle which is moving, in response to an instruction from the vehicle controller 302. When the preceding vehicle is out of the range where the shading area can be formed, the irradiation controllers 228L and 228R reduce the luminance of at least one of the left high-beam light distribution pattern Hi2L and the right high-beam light distribution pattern Hi3R so that the preceding vehicle is not included in the irradiation area. Through the above control, driver's visibility in other areas, particularly, right and left road-shoulder areas can be improved while glare is prevented from being imparted to the preceding vehicle. In addition, the above "reduction" includes a case where the luminance of a light distribution pattern is lowered to such a degree that glare is not imparted to a front vehicle with the light distribution pattern being formed, and a case where the luminance of the light distribution pattern is set to 0. In the case where the luminance of the light distribution pattern is set to 0, a case where that the irradiation controllers 228L and 228R perform switching to the basic low-beam light distribution pattern Lo1 is included.

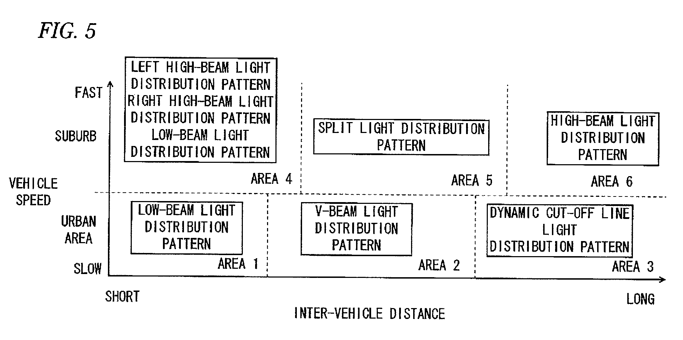

Fig. 5 is an explanatory view showing the relationship between a light distribution pattern which can be formed by the vehicle lamp system related to the present embodiment, and the inter-vehicle distance and the vehicle speed of a subject vehicle. As an example, as shown in Fig. 5, when the vehicle speed is relatively slow and the inter-vehicle distance is short (area 1), a low-beam light distribution pattern (the basic low-beam light distribution pattern Lo1 during left-hand traffic and the Dover low-beam light distribution pattern Lo2 during right-hand traffic) is mainly formed. Additionally, when the vehicle speed is relatively slow and the inter-vehicle distance is moderate (area 2), the V-beam light distribution pattern Lo3 is mainly formed. Moreover, when the vehicle speed is relatively slow and the inter-vehicle distance is long (area 3), a dynamic cut-off line light distribution pattern is mainly formed. In addition, when the vehicle speed is relatively slow, it can be estimated that the subject vehicle is traveling in an urban area.

Additionally, when the vehicle speed is relatively fast and the inter-vehicle distance is low (area 4), the left high-beam light distribution pattern Hi2, the right high-beam light distribution pattern Hi3, and the low-beam light distribution pattern are mainly formed according to the position of the preceding vehicle. Moreover, when the vehicle speed is relatively fast and the inter-vehicle distance is moderate (area 5), a split light distribution pattern is mainly formed. Moreover, when the vehicle speed is relatively fast and the inter-vehicle distance is long (area 6), the high-beam light distribution pattern Hi1 is mainly formed. In addition, when the vehicle speed is relatively fast, it can be estimated that the subject vehicle is traveling in a suburb. The values of the inter-vehicle distance and vehicle speed at boundaries between the respective areas can be appropriately set based on experiments or simulations by a designer.

Subsequently, an example of the light distribution pattern formation control by the vehicle lamp system 200 including the above-described configuration will be described. In the vehicle lamp system 200 related to the present embodiment, when switching is performed between the right high-beam light distribution pattern Hi3, and the left high-beam light distribution pattern Hi2 which has an irradiation area a portion of which has shifted from the irradiation area of the right high-beam light distribution pattern Hi3, the irradiation controllers 228L and 228R makes the lamp unit go through a state where the light and dark (brightness) of an area where an illuminated state changes to a non-illuminated state by the switching and an area where a non-illuminated state changes to an illuminated state by the switching are aligned. Portions of the irradiation areas the right high-beam light distribution pattern Hi3, and the left high-beam light distribution pattern Hi2 shift from each other. Therefore, when switching is performed between both, i.e., when switching is performed from the right high-beam light distribution pattern Hi3 to the left high-beam light distribution pattern Hi2 or switching is performed from the left high-beam light distribution pattern Hi2 to right high-beam light distribution pattern Hi3, the area where an illuminated state changes to a non-illuminated state and the area where a non-illuminated state changes to an illuminated state are simultaneously present. Specifically, for example, when switching is performed from the right high-beam light distribution pattern Hi3 to the left high-beam light distribution pattern Hi2, an area on the opposite lane side above the cut-off lines of the basic low-beam light distribution pattern Lo1 is the area where an illuminated state changes to a non-illuminated state, and an area on the own lane side above the cut-off lines is the area where a non-illuminated state changes to an illuminated state.

When the area where an illuminated state changes to a non-illuminated state and the area where a non-illuminated state changes to an illuminated state are simultaneously present, a driver tends to have a visual disturbance. This is a problem to be solved in improving driver's visibility. On the other hand, in the vehicle lamp system 200 related to the present embodiment, the visual disturbance that a driver may receive is alleviated by making the lamp unit go through the state where the light and dark of the area where an illuminated state changes to a non-illuminated state and the area where a non-illuminated state changes to an illuminated state are aligned. In the present embodiment, when switching is performed between the right high-beam light distribution pattern Hi3 and the left high-beam light distribution pattern Hi2, the irradiation controllers 228L and 228R makes the lamp unit go through a state where both the right high-beam light distribution pattern Hi3 and the left high-beam light distribution pattern Hi2 are not formed. It is thereby possible to perform switching to a new light distribution pattern after both the area where an illuminated state changes to a non-illuminated state and the area where a non-illuminated state changes to an illuminated state are brought into a non-illuminated state. For example, the irradiation controllers 228L and 228R performs a control so as to form the left low-beam light distribution pattern Lo1 as a new light distribution pattern in a state where the right high-beam light distribution pattern Hi3 is formed, and so as to form the left high-beam light distribution pattern Hi2 after a certain time has lapsed. When the lamp unit is made to go through the basic low-beam light distribution pattern Lo1 in this way, the possibility that glare is imparted to the preceding vehicle when a disturbance reduction control is performed can be reduced. In addition, the above "certain time" can be appropriately set based on experiments or simulations by a designer in consideration of the time required to reduce the visual disturbance that a driver may receive, and is, for example, 0.5 to 3 seconds.

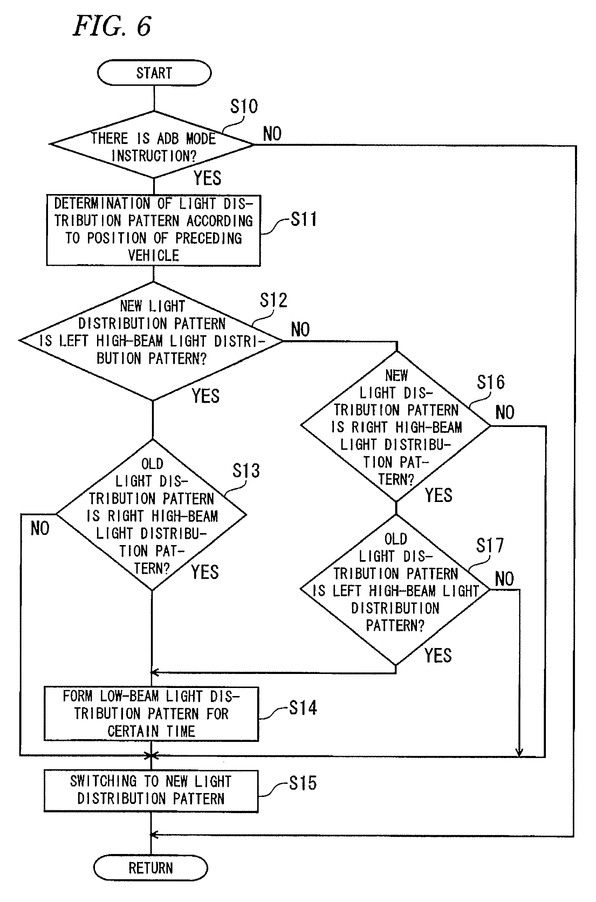

Fig. 6 is a control flow chart of formation of a light distribution pattern in the vehicle lamp system related to the First embodiment. In the flow chart of Fig. 6 (the other following flow charts are also the same), the procedure of each part is shown by combinations of S (initial of Step) that means a step, and a numeral. Additionally, when a certain determination processing is performed by the processing shown by a combination of S and a numeral and the determination result is positive, for example, (Y of S10) is shown by adding Y (initial of Yes). On the other hand, when the determination result is negative, for example, (N of S10) is shown by adding N (initial of No). The irradiation controllers 228L and 228R repeatedly perform this flow at the certain timing.

First, the irradiation controllers 228L and 228R determine whether or not an execution instruction in the ADB mode is performed based on the information obtained from the vehicle controller 302 (S10). If the execution instruction in the ADB mode is not performed (N of S10), a main routine is ended. If the execution instruction in the ADB mode is performed (Y of S10), the irradiation controllers 228L and 228R execute the ADB mode to determine a light distribution pattern according to the presence of a preceding vehicle (S11).

Subsequently, the irradiation controllers 228L and 228R determine whether or not a light distribution pattern (hereinafter appropriately referred to a new light distribution pattern) to be determined in Step S11 is the left high-beam light distribution pattern Hi2 (S12). If the new light distribution pattern is the left high-beam light distribution pattern Hi2 (Y of S12), the irradiation controllers 228L and 228R determine whether or not a light distribution pattern (hereinafter appropriately referred to as an old light distribution pattern) which is currently formed is the right high-beam light distribution pattern Hi3 (S13). If the old light distribution pattern is the right high-beam light distribution pattern Hi3 (Y of S13), the irradiation controllers 228L and 228R perform a control so as to form a low-beam light distribution pattern, here, form the basic low-beam light distribution pattern Lo1 for a certain time (S14). Then, the irradiation controllers 228L and 228R perform switching to the left high-beam light distribution pattern Hi2 which is a new light distribution pattern after a certain time has lapsed (S15), and the main routine is ended. If the old light distribution pattern is not the right high-beam light distribution pattern Hi3 (N of S13), the irradiation controllers 228L and 228R do not go via the formation of the basic low-beam light distribution pattern Lo1, but perform switching to the left high-beam light distribution pattern Hi2 which is a new light distribution pattern (S15), and the main routine is ended.

If the new light distribution pattern is not the left high-beam light distribution pattern Hi2 in Step S12 (N of S12), the irradiation controllers 228L and 228R determine whether or not the new light distribution pattern is the right high-beam light distribution pattern Hi3 (S16). If the new light distribution pattern is the right high-beam light distribution pattern Hi3 (Y of S16), the irradiation controllers 228L and 228R determine whether or not the old light distribution pattern is the left high-beam light distribution pattern Hi2 (S17). If the old light distribution pattern is the left high-beam light distribution pattern Hi2 (Y of S17), the irradiation controllers 228L and 228R perform a control so as to form the basic low-beam light distribution pattern Lo1 for a certain time (S14). Then, the irradiation controllers 228L and 228R perform switching to the right high-beam light distribution pattern Hi3 which is a new light distribution pattern after a certain time has lapsed (S15), and the main routine is ended. If the old light distribution pattern is not the left high-beam light distribution pattern Hi2 (N of S17), the irradiation controllers 228L and 228R do not go via the formation of the basic low-beam light distribution pattern Lo1, but perform switching to the right high-beam light distribution pattern Hi3 which is a new light distribution pattern (S15), and the main routine is ended.

If the new light distribution pattern is not the right high-beam light distribution pattern Hi3 in Step S16 (N of S16), the irradiation controllers 228L and 228R do not go via the formation of the basic low-beam light distribution pattern Lo1, but perform switching to a new light distribution pattern (S15), and the main routine is ended.

As described above, in the vehicle lamp system 200 related to the present embodiment, when switching is performed between the right high-beam light distribution pattern Hi3 and the left high-beam light distribution pattern Hi2, the irradiation controllers 228L and 228R makes the lamp unit go through the formation state of the basic low-beam light distribution pattern Lo1 as the state where the light and dark of the area where an illuminated state changes to a non-illuminated state by the switching and the area where a non-illuminated state changes to an illuminated state by the switching are aligned. It is thereby possible to alleviate the visual disturbance that a driver may receive compared to the conventional vehicle lamp system. As a result, driver's visibility can be improved. Additionally, the fact that the area where an illuminated state changes to a non-illuminated state and the area where a non-illuminated state changes to an illuminated state are simultaneously present depending on the switching of a light distribution pattern can be a factor which imparts glare to a pedestrian or a driver of a preceding vehicle. However, according to the vehicle lamp system 200 related to the present embodiment, it is possible to reduce concern that glare may be imparted to a pedestrian or a driver of a preceding vehicle.

### (Second embodiment)

The vehicle lamp system related to a Second embodiment makes the lamp unit go through a state where the split light distribution pattern is formed when switching is performed between the right high-beam light distribution pattern Hi3 and the left high-beam light distribution pattern Hi2. The present embodiment will be described below. In addition, since the main components of the vehicle lamp system 200, the shapes of light distribution patterns which can be formed, and the like are the same as those of the first embodiment, the same components as the first embodiment will be designated by the same reference numerals, and the description and illustration thereof will be appropriately omitted.

In the vehicle lamp system 200 related to the present embodiment, when switching is performed between the right high-beam light distribution pattern Hi3 and the left high-beam light distribution pattern Hi2, the irradiation controllers 228L and 228R makes the lamp unit go through the state where both the right high-beam light distribution pattern Hi3 and the left high-beam light distribution pattern Hi2 are formed, as the state where the light and dark of the area where an illuminated state changes to a non-illuminated state and the area where a non-illuminated state changes to an illuminated state are aligned. It is thereby possible to perform switching to a new light distribution pattern after both the area where an illuminated state changes to a non-illuminated state and the area where a non-illuminated state changes to an illuminated state are brought into an illuminated state. For example, when the left high-beam light distribution pattern Hi2 is intended to form as a new light distribution pattern in a state where the right high-beam light distribution pattern Hi3 is formed, the irradiation controller 228L switches the right high-beam light distribution pattern Hi3 to the left high-beam light distribution pattern Hi2, and the irradiation controller 228R continues formation of the right high-beam light distribution pattern Hi3 for a certain time. This brings a state where both the right high-beam light distribution pattern Hi3 and the left high-beam light distribution pattern Hi2 are formed, i.e., a state where the split light distribution pattern is formed. Then, the irradiation controllers 228R performs switching to the left high-beam light distribution pattern Hi2 after a certain time has lapsed.

Even through such a control, it is possible to alleviate the visual disturbance that a driver may receive when the area where an illuminated state changes to a non-illuminated state and the area where a non-illuminated state changes to an illuminated state are simultaneously present. Additionally, when the lamp unit is made to go through the split light distribution pattern as described above, the possibility that glare is imparted to a preceding vehicle can be reduced to some extent when a disturbance reduction control is performed, and driver's visibility can be improved. In addition, the above "certain time" can be appropriately set based on experiments or simulations by a designer in consideration of the time required to alleviate the visual disturbance that a driver may receive, and is, for example, 0.5 to 3 seconds.

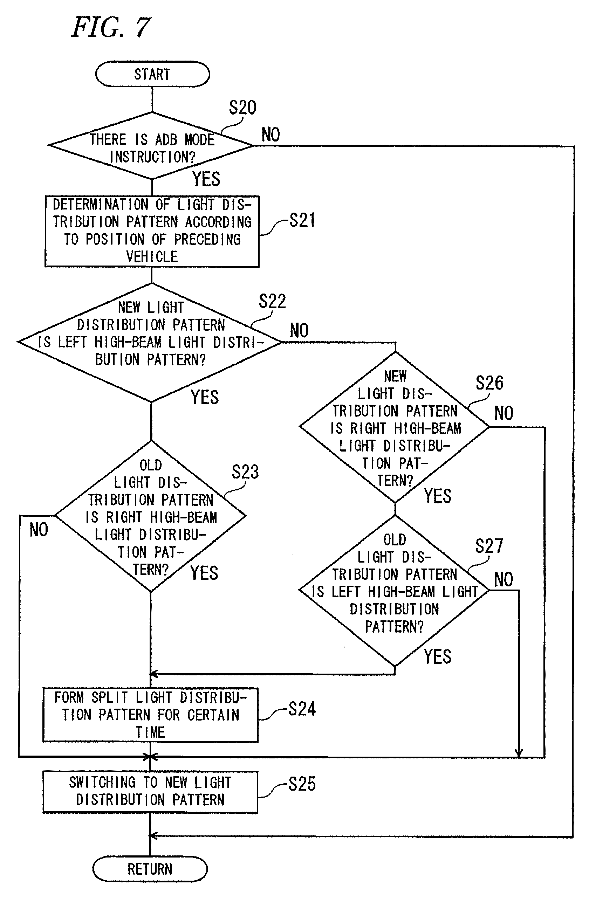

Fig. 7 is a control flow chart of formation of a light distribution pattern in the vehicle lamp system related to the Second embodiment. The irradiation controllers 228L and 228R repeatedly perform this flow at the certain timing.

First, the irradiation controllers 228L and 228R determine whether or not an execution instruction in the ADB mode is performed based on the information obtained from the vehicle controller 302 (S20). If the execution instruction in the ADB mode is not performed (N of S20), a main routine is ended. If the execution instruction in the ADB mode is performed (Y of S20), the irradiation controllers 228L and 228R execute the ADB mode to determine a light distribution pattern according to the presence of a preceding vehicle (S21).

Subsequently, the irradiation controllers 228L and 228R determine whether or not the new light distribution pattern is the left high-beam light distribution pattern Hi2 (S22). If the new light distribution pattern is the left high-beam light distribution pattern Hi2 (Y of S22), the irradiation controllers 228L and 228R determine whether or not the old light distribution pattern is the right high-beam light distribution pattern Hi3 (S23). If the old light distribution pattern is the right high-beam light distribution pattern Hi3 (Y of S23), the irradiation controllers 228L and 228R perform a control so as to form the split light distribution pattern for a certain time (S24). Then, the irradiation controllers 228L and 228R perform switching to the left high-beam light distribution pattern Hi2 which is a new light distribution pattern after a certain time has lapsed (S25), and the main routine is ended. If the old light distribution pattern is not the right high-beam light distribution pattern Hi3 (N of S23), the irradiation controllers 228L and 228R do not go via the formation of the split light distribution pattern, but perform switching to the left high-beam light distribution pattern Hi2 which is a new light distribution pattern (S25), and the main routine is ended.

If the new light distribution pattern is not the left high-beam light distribution pattern Hi2 in Step S22 (N of S22), the irradiation controllers 228L and 228R determine whether or not the new light distribution pattern is the right high-beam light distribution pattern Hi3 (S26). If the new light distribution pattern is the right high-beam light distribution pattern Hi3 (Y of S26), the irradiation controllers 228L and 228R determine whether or not the old light distribution pattern is the left high-beam light distribution pattern Hi2 (S27). If the old light distribution pattern is the left high-beam light distribution pattern Hi2 (Y of S27), the irradiation controllers 228L and 228R perform a control so as to form the split light distribution pattern for a certain time (S24). Then, the irradiation controllers 228L and 228R perform switching to the right high-beam light distribution pattern Hi3 which is a new light distribution pattern after a certain time has lapsed (S25), and the main routine is ended. If the old light distribution pattern is not the left high-beam light distribution pattern Hi2 (N of S27), the irradiation controllers 228L and 228R do not go via the formation of the split light distribution pattern, but perform switching to the right high-beam light distribution pattern Hi3 which is a new light distribution pattern (S25), and the main routine is ended.

If the new light distribution pattern is not the right high-beam light distribution pattern Hi3 in Step S26 (N of S26), the irradiation controllers 228L and 228R do not go via the formation of the split light distribution pattern, but perform switching to a new light distribution pattern (S25), and the main routine is ended.

As described above, in the vehicle lamp system 200 related to the present embodiment, the lamp unit is made to go through the formation state of the split light distribution pattern when the irradiation controllers 228L and 228R perform switching between the right high-beam light distribution pattern Hi3 and the left high-beam light distribution pattern Hi2. It is also thereby possible to alleviate the visual disturbance that a driver may receive compared to the conventional vehicle lamp system. As a result, driver's visibility can be improved.

### (Third embodiment)

The vehicle lamp system related to a third embodiment makes the lamp unit go through a state where the high beam light distribution pattern Hi1 is formed when switching is performed between the right high-beam light distribution pattern Hi3 and the left high-beam light distribution pattern Hi2. The present embodiment will be described below. In addition, since the main components of the vehicle lamp system 200, the shapes of light distribution patterns which can be formed, and the like are the same as those of the first embodiment, the same components as the First embodiment will be designated by the same reference numerals, and the description and illustration thereof will be appropriately omitted.

In the vehicle lamp system 200 related to the present embodiment, when switching is performed between the right high-beam light distribution pattern Hi3 and the left high-beam light distribution pattern Hi2, the irradiation controllers 228L and 228R makes the lamp unit go through the formation state of the high-beam light distribution pattern Hi2, as the state where the light and dark of the area where an illuminated state changes to a non-illuminated state and the area where a non-illuminated state changes to an illuminated state are aligned. It is thereby possible to perform switching to a new light distribution pattern after both the area where an illuminated state changes to a non-illuminated state and the area where a non-illuminated state changes to an illuminated state are brought into an illuminated state. For example, when the left high-beam light distribution pattern Hi2 is formed as a new light distribution pattern in a state where the right high-beam light distribution pattern Hi3 is formed, both the irradiation controllers 228L and 228R form the high-beam light distribution pattern Hi1, and performed switching to the left high-beam light distribution pattern Hi2 after a certain time has lapsed.

Even through such a control, it is possible to alleviate the visual disturbance that a driver may receive when the area where an illuminated state changes to a non-illuminated state and the area where a non-illuminated state changes to an illuminated state are simultaneously present. Additionally, when the lamp unit is made to go through the high-beam light distribution pattern Hi1 as described above, driver's visibility during a disturbance reduction control execution can be further improved. In addition, the above "certain time" can be appropriately set based on experiments or simulations by a designer in consideration of the time required to reduce the visual disturbance that a driver may receive, and is, for example, 0.5 to 3 seconds.

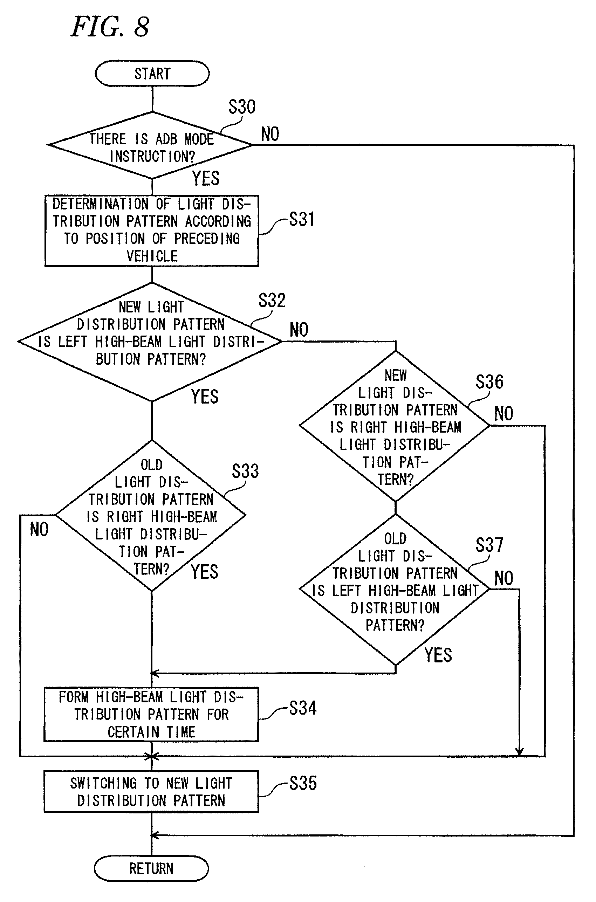

Fig. 8 is a control flow chart of formation of a light distribution pattern in the vehicle lamp system related to the Third embodiment. The irradiation controllers 228L and 228R repeatedly perform this flow at the certain timing.

First, the irradiation controllers 228L and 228R determine whether or not an execution instruction in the ADB mode is performed based on the information obtained from the vehicle controller 302 (S30). If the execution instruction in the ADB mode is not performed (N of S30), a main routine is ended. If the execution instruction in the ADB mode is performed (Y of S30), the irradiation controllers 228L and 228R execute the ADB mode to determine a light distribution pattern according to the presence of a preceding vehicle (S31).

Subsequently, the irradiation controllers 228L and 228R determine whether or not the new light distribution pattern is the left high-beam light distribution pattern Hi2 (S32). If the new light distribution pattern is the left high-beam light distribution pattern Hi2 (Y of S32), the irradiation controllers 228L and 228R determine whether or not the old light distribution pattern is the right high-beam light distribution pattern Hi3 (S33). If the old light distribution pattern is the right high-beam light distribution pattern Hi3 (Y of S33), the irradiation controllers 228L and 228R perform a control so as to form the high-beam light distribution pattern Hi1 for a certain time (S34). Then, the irradiation controllers 228L and 228R perform switching to the left high-beam light distribution pattern Hi2 which is a new light distribution pattern after a certain time has lapsed (S35), and the main routine is ended. If the old light distribution pattern is not the right high-beam light distribution pattern Hi3 (N of S33), the irradiation controllers 228L and 228R do not go via the formation of the high-beam light distribution pattern Hi1, but perform switching to the left high-beam light distribution pattern Hi2 which is a new light distribution pattern (S35), and the main routine is ended.

If the new light distribution pattern is not the left high-beam light distribution pattern Hi2 in Step S32 (N of S22), the irradiation controllers 228L and 228R determine whether or not the new light distribution pattern is the right high-beam light distribution pattern Hi3 (S36). If the new light distribution pattern is the right high-beam light distribution pattern Hi3 (Y of S36), the irradiation controllers 228L and 228R determine whether or not the old light distribution pattern is the left high-beam light distribution pattern Hi2 (S37). If the old light distribution pattern is the left high-beam light distribution pattern Hi2 (Y of S37), the irradiation controllers 228L and 228R perform a control so as to form the high-beam light distribution pattern Hi1 for a certain time (S34). Then, the irradiation controllers 228L and 228R perform switching to the right high-beam light distribution pattern Hi3 which is a new light distribution pattern after a certain time has lapsed (S35), and the main routine is ended. If the old light distribution pattern is not the left high-beam light distribution pattern Hi2 (N of S37), the irradiation controllers 228L and 228R do not go via the formation of the high-beam light distribution pattern Hi1, but perform switching to the right high-beam light distribution pattern Hi3 which is a new light distribution pattern (S35), and the main routine is ended.

If the new light distribution pattern is not the right high-beam light distribution pattern Hi3 in Step S36 (N of S36), the irradiation controllers 228L and 228R do not go via the formation of the high-beam light distribution pattern Hi1, but perform switching to a new light distribution pattern (S35), and the main routine is ended.

As described above, in the vehicle lamp system 200 related to the present embodiment, the lamp unit is made to go through the formation state of the high-beam light distribution pattern Hi1 when the irradiation controllers 228L and 228R perform switching between the right high-beam light distribution pattern Hi3 and the left high-beam light distribution pattern Hi2. It is also thereby possible to alleviate the visual disturbance that a driver may receive compared to the conventional vehicle lamp system. As a result, visibility for the driver can be improved.

### (Fourth embodiment)(non-inventive)

The vehicle lamp system related to a Fourth embodiment performs switching with a certain standby time when the switching is performed between light distribution patterns. The present embodiment will be described below. In addition, since the main components of the vehicle lamp system 200, the shapes of light distribution patterns which can be formed, and the like are the same as those of the First embodiment, the same components as the First embodiment will be designated by the same reference numerals, and the description and illustration thereof will be appropriately omitted.

In the vehicle lamp system 200 related to the present embodiment, when switching is performed between respective light distribution patterns, the irradiation controllers 228L and 228R perform switching from an old light distribution pattern to a new light distribution pattern after a certain standby time has lapsed. Thereby, since the formation state of the old light distribution pattern is continued during standby time, it is possible to prevent light distribution patterns from being frequently switched. As a result, the visual discomfort that a driver may receive can be reduced.

Additionally, in the present embodiment, a standby time T1 when a new light distribution pattern is the low-beam light distribution pattern (the basic low-beam light distribution pattern Lo1 during left-hand traffic and the Dover low-beam light distribution pattern Lo2 during right-hand traffic) is set to become a shorter time compared to a standby time T2 when a new light distribution pattern is other light distribution patterns. Thereby, the visual discomfort that a driver may receive due to frequent switching of light distribution patterns can be reduced, and a certain time for which a preceding vehicle may receive glare can be shortened. The standby times T1 and T2 can be appropriately set based on experiments or simulations by a designer. For example, it is possible to make a setting so as to satisfy T1<T2 when the standby time T1 is within a range of 0 to 0.5 seconds, the standby time T2 is within a range of 0.5 to 3 seconds.

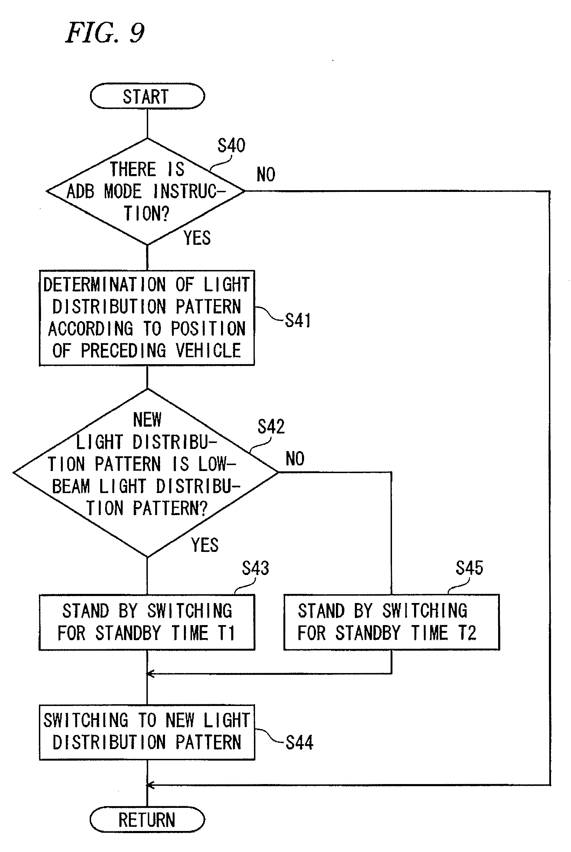

Fig. 9 is a control flow chart of formation of a light distribution pattern in the vehicle lamp system related to the fourth embodiment. The irradiation controllers 228L and 228R repeatedly perform this flow at the certain timing.

First, the irradiation controllers 228L and 228R determine whether or not an execution instruction in the ADB mode is performed based on the information obtained from the vehicle controller 302 (S40). If the execution instruction in the ADB mode is not performed (N of S40), a main routine is ended. If the execution instruction in the ADB mode is performed (Y of S40), the irradiation controllers 228L and 228R execute the ADB mode to determine a light distribution pattern according to the presence of a preceding vehicle (S41).

Here, the irradiation controllers 228L and 228R determine whether or not the new light distribution pattern is a low-beam light distribution pattern, here, the basic low-beam light distribution pattern Lo1 (S42). If the new light distribution pattern is the basic low-beam light distribution pattern Lo1 (Y of S42), the irradiation controllers 228L and 228R stand by switching to the new light distribution pattern for the standby time T1 (S43). Then, the irradiation controllers 228L and 228R perform switching to the basic low-beam light distribution pattern Lo1 which is a new light distribution pattern after the standby time T1 has lapsed (S44), and the main routine is ended. If the new light distribution pattern is not the basic low-beam light distribution pattern Lo1 (N of S42), the irradiation controllers 228L and 228R stand by switching to the new light distribution pattern for the standby time T2 (S45). Then, the irradiation controllers 228L and 228R perform switching to a new light distribution pattern after the standby time T2 has lapsed (S44), and the main routine is ended.

As described above, in the vehicle lamp system 200 related to the present embodiment, when switching is performed between respective light distribution patterns, the irradiation controllers 228L and 228R perform switching from an old light distribution pattern to a new light distribution pattern after a certain standby time has lapsed. Thereby, the visual discomfort that a driver may receive can be reduced. As a result, driver's visibility can be improved.

### (Fifth embodiment) (non-inventive)

The vehicle lamp system related to a Fifth embodiment performs switching after switching determination of the same pattern is continuously performed by a certain number of times when switching is performed between light distribution patterns. The present embodiment will be described below. In addition, since the main components of the vehicle lamp system 200, the shapes of light distribution patterns which can be formed, and the like are the same as those of the First embodiment, the same components as the First embodiment will be designated by the same reference numerals, and the description and illustration thereof will be appropriately omitted.

In the vehicle lamp system 200 related to the present embodiment, when switching is performed between respective light distribution patterns, the irradiation controllers 228L and 228R perform switching from an old light distribution pattern to a new light distribution pattern after implementation of filter processing. That is, when switching of light distribution patterns is performed, the irradiation controllers 228L and 228R perform switching from an old light distribution pattern to a new light distribution pattern the same pattern is continuously selected by a certain number of times as a new light distribution pattern. Thereby, since the formation state of the old light distribution pattern is continued until the switching determination of the same pattern reaches a certain number of times, it is possible to prevent light distribution patterns from being frequently switched. As a result, the visual discomfort that a driver may experience can be reduced.

Additionally, in the present embodiment, the number N1 of times of continuous determination required for switching when a new light distribution pattern is the low-beam light distribution pattern (the basic low-beam light distribution pattern Lo1 during left-hand traffic and the Dover low-beam light distribution pattern Lo2 during right-hand traffic) is set to be fewer compared to the number N2 of times of continuous determination required for switching when a new light distribution pattern is other light distribution patterns. Thereby, the visual discomfort that a driver may receive due to frequent switching of light distribution patterns can be reduced, and a certain time for which a preceding vehicle may receive glare can be shortened. The numbers N1 and N2 of times of continuous determination can be appropriately set based on experiments or simulations by a designer, for example, the number N1 of times of continuous determination can be set to 2, and the number N2 of times of continuous determination can be set to 10.

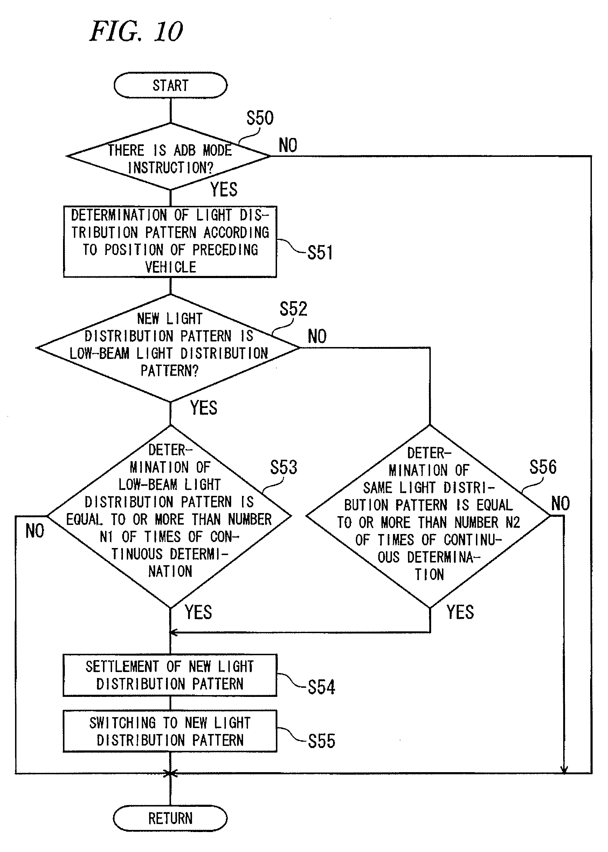

Fig. 10 is a control flow chart of formation of a light distribution pattern in the vehicle lamp system related to the Fifth embodiment. The irradiation controllers 228L and 228R repeatedly perform this flow at the certain timing. Additionally, the irradiation controllers 228L and 228R can execute this flow so that the determination cycle of a new light distribution pattern is set to, for example, 50 ms.

First, the irradiation controllers 228L and 228R determine whether or not an execution instruction in the ADB mode is performed based on the information obtained from the vehicle controller 302 (S50). If the execution instruction in the ADB mode is not performed (N of S50), a main routine is ended. If the execution instruction in the ADB mode is performed (Y of S50), the irradiation controllers 228L and 228R execute the ADB mode to determine a light distribution pattern according to the presence of a preceding vehicle (S51).

Subsequently, the irradiation controllers 228L and 228R determine whether or not the new light distribution pattern is the low-beam light distribution pattern, here, the basic low-beam light distribution pattern Lo1 (S52). If the new light distribution pattern is the basic low-beam light distribution pattern Lo1 (Y of S52), the irradiation controllers 228L and 228R determines whether or not the number of times of continuous determination of the basic low-beam light distribution pattern Lo1 is equal to or more than the number N1 of times of continuous determination (S53). If the number of times of the determination is equal to or more than the number N1 of times of continuous determination (Y of S53), the irradiation controllers 228L and 228R settle the new light distribution pattern to the basic low-beam light distribution pattern Lo1 (S54), perform switching to the basic low-beam light distribution pattern Lo1 which is a new light distribution pattern (S55), and the main routine is ended. If the number of times of the determination is less than the number N1 of times of continuous determination (N of S53), the irradiation controllers 228L and 228R ends the main routine without performing switching to a new light distribution pattern.

If the new light distribution pattern is not the basic low-beam light distribution pattern Lo1 (N of S52), the irradiation controllers 228L and 228R determines whether or not the number of times of continuous determination of the determined light distribution pattern is equal to or more than the number N2 of times of continuous determination (S56). If the number of times of the determination is equal to or more than the number N2 of times of continuous determination (Y of S56), the irradiation controllers 228L and 228R settle the new light distribution pattern to the determined light distribution pattern (S54), and perform switching to a new light distribution pattern (S55), and the main routine is ended. If the number of times of the determination is less than the number N2 of times of continuous determination (N of S56), the irradiation controllers 228L and 228R end the main routine without performing switching to a new light distribution pattern.

As described above, in the vehicle lamp system 200 related to the present embodiment, when switching is performed between respective light distribution patterns, the irradiation controller 228L and 228R perform switching from an old light distribution pattern to a new light distribution pattern after determination of switching to the same pattern is continuously performed a certain number of times. Thereby, the visual discomfort that a driver may receive can be reduced. As a result, visibility for the driver can be improved.

The invention is not limited to the above-described embodiments, but the respective embodiments can be combined with each other, or alterations, such as various kinds of design changes, can be made based on the knowledge of those skilled in the art. Embodiments in which such combinations or alterations are made are also included in the scope of the invention. The above-described respective embodiments, and new embodiments produced by combinations between the above-described embodiments and the following modifications may have the effects of the combined embodiments and modifications in combination.

In the above-described Embodiments 1 to 3, when switching is performed between the left high-beam light distribution pattern Hi2 and the right high-beam light distribution pattern Hi3, the lamp unit is made to go through the state where the light and dark of the area where an illuminated state changes to a non-illuminated state by the switching and the area where a non-illuminated state changes to an illuminated state by the switching are aligned. However, the invention is limited thereto. When switching is performed between light distribution patterns in which at least portions of irradiation areas have shifted from each other without being limited to the left high-beam light distribution pattern Hi2 and the right high-beam light distribution pattern Hi3, the same effects as Embodiments 1 to 3 may be obtained by applying the control of making the lamp unit go through the state where the light and dark of the area where an illuminated state changes to a non-illuminated state and the area where a non-illuminated state changes to an illuminated state.

In the above-described respective embodiments, the irradiation controllers 228L and 228R determine the traveling state of a subject vehicle, and the presence of a front vehicle. However, the vehicle controller 302 may be made to execute the determination. In this case, the irradiation controllers 228L and 228R control the turning-on/off of the bulb 14, driving of the swivel actuator 222 and the motor 238, and the like based on instructions from the vehicle controller 302.

## Claims

1. A vehicle lamp system (200) comprising:
a vehicle lamp (10) that forms a first light distribution pattern and a second light distribution pattern,
wherein the second light distribution pattern forms an irradiation area where at least a portion thereof is shifted from an irradiation area formed by the first light distribution pattern; **characterized in that**
a controller (228) that controls the vehicle lamp (10) to switch between a first state (Hi3) and a second state (Hi2) via an intermediate state (Lo, Hi1), wherein the intermediate state (Lo, Hi1) is maintained for a certain time,
wherein in the first state (Hi3) the first light distribution pattern is formed,
wherein in the second state the second light distribution pattern is formed,
wherein in the intermediate state (Lo, Hi1) a first irradiation area and a second irradiation area are matched in brightness, the first irradiation area is changed from an illuminated state to a non-illuminated state due to the switching, and the second irradiation area is changed from a non-illuminated state to the illuminated state due to the switching, and
wherein the first light distribution pattern forms an irradiation area, which is on a opposite lane side, which is opposite an own lane of the vehicle, and the irradiation area is above a cut-off line of a low-beam light distribution pattern and the first light distribution pattern also forms a non-irradiation area on the own lane side of the vehicle, respectively,
wherein the second light distribution pattern forms an irradiation area, which is on the own lane side of the vehicle and the irradiation area is above the cut-off line of the low-beam light distribution pattern and the second light distribution pattern forms a non-irradiation area on the opposite lane side, respectively.

2. The vehicle lamp system (200) according to Claim 1,
wherein both the first light distribution pattern and the second light distribution pattern are not formed simultaneously in the intermediate state (Lo, Hi1).

3. The vehicle lamp system (200) according to Claim 1,
wherein both the first light distribution pattern and the second light distribution pattern are formed in the intermediate state (Lo, Hi1).

4. The vehicle lamp system (200) according to Claim 1,
wherein the vehicle lamp (10) is configured to form a high-beam light distribution pattern, and
wherein the high-beam light distribution pattern is formed in the intermediate state (Lo, Hi1).

## Patentansprüche

1. Fahrzeuglampensystem (200), umfassend:
eine Fahrzeuglampe (10), die ein erstes Lichtverteilungsmuster und ein zweites Lichtverteilungsmuster bildet,
wobei das zweite Lichtverteilungsmuster einen Bestrahlungsbereich bildet, bei welchem wenigstens ein Teil von einem von dem ersten Lichtverteilungsmuster gebildeten Bestrahlungsbereich verschoben ist; **dadurch gekennzeichnet, dass**
eine Steuereinheit (228), die die Fahrzeuglampe (10) steuert, um zwischen einem ersten Zustand (Hi3) und einem zweiten Zustand (Hi2) über einen Zwischenzustand (Lo, Hi1) zu schalten, wobei der Zwischenzustand (Lo,Hi1) für einen bestimmten Zeitraum gehalten wird,
wobei in dem ersten Zustand (Hi3) das erste Lichtverteilungsmuster gebildet wird,
wobei in dem zweiten Zustand das zweite Lichtverteilungsmuster gebildet wird,
wobei in dem Zwischenzustand (Lo,Hi1) ein erster Bestrahlungsbereich und ein zweiter Bestrahlungsbereich in der Helligkeit angepasst werden, der erste Bestrahlungsbereich durch Schalten von einem beleuchteten Zustand zu einem nicht beleuchteten Zustand geändert wird und der zweite Bestrahlungsbereich durch Schalten von einem nicht beleuchteten Zustand zu einem beleuchteten Zustand geändert wird, und
wobei das erste Lichtverteilungsmuster einen Bestrahlungsbereich bildet, der auf einer Gegenfahrbahn liegt, die einer eigenen Fahrbahn des Fahrzeugs gegenüberliegt, und wobei der Bestrahlungsbereich oberhalb einer Hell-Dunkel Grenze eines Abblendlichtverteilungsmusters liegt und wobei das erste Lichtverteilungsmuster auch einen nicht bestrahlten Bereich auf der eigenen Fahrbahn des Fahrzeugs bildet,
wobei das zweite Lichtverteilungsmuster einen Bestrahlungsbereich bildet, welche auf der eigenen Fahrbahn des Fahrzeuges liegt und wobei der Bestrahlungsbereich oberhalb einer Hell-Dunkel Grenze des Abblendlichtverteilungsmusters liegt und das zweite Lichtverteilungsmuster einen nicht bestrahlten Bereich auf der Gegenfahrbahn bildet.

2. Fahrzeuglampensystem (200) nach Anspruch 1, wobei beide, das erste Lichtverteilungsmuster und das zweite Lichtverteilungsmuster, nicht gleichzeitig in dem Zwischenzustand (Lo, Hi1) gebildet sind.

3. Fahrzeuglampensystem (200) nach Anspruch 1, wobei beide, das erste Lichtverteilungsmuster und das zweite Lichtverteilungsmuster, gleichzeitig in dem Zwischenzustand (Lo, Hi1) gebildet sind.

4. Fahrzeuglampensystem (200) nach Anspruch 1, wobei die Fahrzeuglampe (10) ausgebildet ist um ein Fernlichtverteilungsmuster zu bilden, und wobei das Fernlichtverteilungsmuster in dem Zwischenzustand (Lo, Hi1) gebildet ist.

## Revendications

1. Système de phare de véhicule (200) comprenant :
un phare de véhicule (10) formant un premier schéma de distribution lumineuse et un second schéma de distribution lumineuse,
dans lequel le second schéma de distribution lumineuse forme une zone de rayonnement où une partie au moins de celle-ci est décalée par rapport à une zone de rayonnement formée par le premier schéma de distribution lumineuse ; **caractérisé par** :
un dispositif de commande (228) commandant le phare de véhicule (10) pour qu'il se commute entre un premier état (Hi3) et un second état (Hi2) en passant par un état intermédiaire (Lo, Hi1), dans lequel l'état intermédiaire (Lo, Hi1) est maintenu pendant un certain temps,
dans lequel dans le premier état (Hi3), le premier schéma de distribution lumineuse est formé,
dans lequel dans le second état, le second schéma de distribution lumineuse est formé,
dans lequel dans l'état intermédiaire (Lo, Hi1), une première zone de rayonnement et une seconde zone de rayonnement sont adaptées en luminosité, la première zone de rayonnement passe d'un état éclairé à un état non éclairé du fait de la commutation, et la seconde zone de rayonnement passe d'un état non éclairé à l'état éclairé du fait de la commutation, et
dans lequel le premier schéma de distribution lumineuse forme une zone de rayonnement qui se trouve d'un côté de voie opposée qui est opposé à une voie propre du véhicule, la zone de rayonnement se trouve au-dessus d'une ligne de coupure d'un schéma de distribution lumineuse de feu de croisement et le premier schéma de distribution lumineuse forme également une zone de non-rayonnement du côté de voie propre du véhicule, respectivement,
dans lequel le second schéma de distribution lumineuse forme une zone de rayonnement qui se trouve du côté de voie propre du véhicule, la zone de rayonnement se trouve au-dessus de la ligne de coupure du schéma de distribution lumineuse de feu de croisement et le second schéma de distribution lumineuse forme une zone de non-rayonnement du côté de voie opposée, respectivement.

2. Système de phare de véhicule (200) selon la revendication 1,
dans lequel le premier schéma de distribution lumineuse et le second schéma de distribution lumineuse ne se forment pas simultanément à l'état intermédiaire (Lo, Hi1).

3. Système de phare de véhicule (200) selon la revendication 1,
dans lequel le premier schéma de distribution lumineuse et le second schéma de distribution lumineuse se forment tous deux à l'état intermédiaire (Lo, Hi1).

4. Système de phare de véhicule (200) selon la revendication 1,
dans lequel le phare de véhicule (10) est conçu pour former un schéma de distribution lumineuse de feu de route, et
dans lequel le schéma de distribution lumineuse de feu de route se forme à l'état intermédiaire (Lo, Hi1).
